# EUROPEAN PATENT APPLICATION

(11) **EP 3 771 171 A1**
(43) Date of publication of application: **27.01.2021**
(21) Application number: 19917522.5
(22) Date of filing: 16.07.2019
(51) Int. Cl.: H04L 29/06

(54) **WEBSITE DETECTION METHOD AND SYSTEM**

(30) Priority: 29.05.2019 CN 201910457676
(71) Applicant: Wangsu Science & Technology Co., Ltd., Shanghai 200030 (CN)
(72) Inventor: CHEN, Qiansen, Shanghai 200030 (CN); LIN, Hanrong, Shanghai 200030 (CN); QIN, Cheng, Shanghai 200030 (CN)
(74) Representative: Vinsome, Rex Martin
(86) International application number: PCT/CN2019/096173
(87) International publication number: WO 2020/237799

(57) **Abstract**

Some embodiments of the present disclosure disclose a method and system for website detection, which fall into the field of computer technology. The method includes: a cloud platform receives a website detection request carrying a target URL and forwards the website detection request to a target edge device corresponding to the target URL (201); the target edge device acquires a page screenshot corresponding to the target URL, and analyzes the page screenshot based on a preset character recognition algorithm and/or a picture analysis model to generate an analysis result (202); and the target edge device feeds back the analysis result to a transmitting terminal of the website detection request (203). According to embodiments of the present disclosure, cost of website detection may be effectively reduced, an efficiency of website detection may be improved, consumption of bandwidth traffic may be reduced and delay of website detection may be shortened.

## Description

### CROSS REFERENCE TO RELATED APPLICATIONS

The present disclosure claims priority to Chinese patent application No. 201910457676.6, entitled "Method and System for Website Detection", filed on May 29, 2019, which is incorporated herein by reference in its entirety.

### TECHNICAL FIELD

The present disclosure relates to the field of computer technology, in particular to a method and system for website detection.

### BACKGROUND

With rapid development of the Internet in recent years, there are more and more websites in the Internet, and contents of websites are becoming more and more rich and diverse. Many websites containing illegal contents also appear frequently, or websites are hijacked and tampered by malicious attacks, resulting in illegal contents exist on the websites. Therefore, website supervision has become a hot demand in the current Internet field.

At present, the website supervision is mostly performed by manual detection. When it is necessary to detect whether a certain website contains illegal contents, the website can upload a text picture of the website to a website supervisor, and then a network administrator can carry out the manual detection on the content of the text picture to judge whether the website contains illegal contents.

In the process of implementing the present disclosure, it is found that the existing technology has at least the following problems:
Due to the continuous increase in the number and contents of websites, the number of texts and pictures that need to be manually detected is large. First, examination on a large number of texts and pictures requires a large amount of manpower and time cost. Secondly, a large number of texts and pictures that are uploaded to the website supervisor result in high bandwidth traffic consumption and detection delay. Therefore, current website detection is difficult, inefficient, slow and costly.

### SUMMARY

In order to solve problems of the existing technology, some embodiments of the present disclosure provide a method and system for website detection. The technical solution is as follows.

In a first aspect, a method for website detection applied to an edge computing system is provided. The edge computing system includes a cloud platform and a plurality of edge devices of distributed deployment, where:
the cloud platform receives a website detection request carrying a target URL and forwards the website detection request to a target edge device corresponding to the target URL;
the target edge device acquires a page screenshot corresponding to the target URL, and analyzes the page screenshot based on a preset character recognition algorithm and/or a picture analysis model to generate an analysis result; and
the target edge device feeds back the analysis result to a transmitting terminal of the website detection request.

For example, the analyzing the page screenshot based on the preset character recognition algorithm and/or the picture analysis model to generate the analysis result includes:
recognizing, by the target edge device, characters in the page screenshot based on an Optical Character Recognition (OCR) technology, and comparing the recognized characters with a violation text base based on an Aho-Corasick (AC) automaton algorithm to generate a text analysis result; and/or,
detecting, by the target edge device, whether the page screenshot contains a violation picture based on the picture analysis model to generates a picture analysis result.

For example, the method further includes:
training, by the target edge device, the picture analysis model in accordance with the picture analysis result to update a model parameter of the picture analysis model.

For example, the training by the target edge device the picture analysis model in accordance with the picture analysis result includes:
training, by the target edge device, the picture analysis model in accordance with the picture analysis result if a result confirmation message sent by the transmitting terminal is received, otherwise, discarding the picture analysis result.

For example, before training by the target edge device the picture analysis model in accordance with the picture analysis result, the method further includes:
detecting, by the target edge device, the picture analysis result based on a preset picture information detection algorithm, and adjusting the picture analysis result in accordance with a detection result; or
receiving, by the target edge device, a manual adjustment instruction for the picture analysis result, and adjusting the picture analysis result in accordance with the manual adjustment instruction.

For example, the method further includes:
periodically sending, by the target edge device, the model parameter of the picture analysis model to the cloud platform;
periodically updating, by the cloud platform, the model parameter of the picture analysis model corresponding to each edge device based on the model parameter of the picture analysis model newly uploaded by each edge device; and
feeding back, by the cloud platform, the model parameter of the corresponding updated picture analysis model to the each edge device.

For example, the edge computing system includes a load balancing device and a plurality of cloud platforms;
the method, before the cloud platform receives the website detection request carrying the target URL, further includes:
receiving, by the load balancing device, the website detection request carrying the target URL, and forwarding the website detection request to a target cloud platform in accordance with operating states of the plurality of cloud platforms.

In a second aspect, a system for website detection is provided. The system includes a cloud platform and a plurality of edge devices of distributed deployment, where:
the cloud platform is configured to receive a website detection request carrying a target URL and forward the website detection request to a target edge device corresponding to the target URL;
the target edge device is configured acquire a page screenshot corresponding to the target URL, and analyze the page screenshot based on a preset character recognition algorithm and/or a picture analysis model to generate an analysis result; and
the target edge device is configured to feed back the analysis result to a transmitting terminal of the website detection request.

For example, the target edge device is specifically configured to:
recognize characters in the page screenshot based on an Optical Character Recognition (OCR) technology, and compare the recognized characters with a violation text base based on an Aho-Corasick (AC) automaton algorithm to generate a text analysis result; and/or,
detect whether the page screenshot contains a violation picture based on the picture analysis model to generates a picture analysis result.

For example, the target edge device is further configured to:
train the picture analysis model in accordance with the picture analysis result to update a model parameter of the picture analysis model.

For example, the target edge device is specifically configured to:
train the picture analysis model in accordance with the picture analysis result if a result confirmation message sent by the transmitting terminal is received, otherwise, discard the picture analysis result.

For example, the target edge device is further configured to:
detect the picture analysis result based on a preset picture information detection algorithm before training the picture analysis model in accordance with the picture analysis result, and adjust the picture analysis result in accordance with a detection result; or
receive a manual adjustment instruction for the picture analysis result before training the picture analysis model in accordance with the picture analysis result, and adjust the picture analysis result in accordance with the manual adjustment instruction.

For example, the target edge device is further configured to periodically send the model parameter of the picture analysis model to the cloud platform;
the cloud platform is further configured to periodically update the model parameter of the picture analysis model corresponding to each edge device based on the model parameter of the picture analysis model newly uploaded by each edge device, and to feed back the model parameter of the corresponding updated picture analysis model to the each edge device.

For example, the system includes a load balancing device and a plurality of cloud platforms;
the load balancing device is configured to receive the website detection request carrying the target URL, and to forward the website detection request to a target cloud platform in accordance with operating states of the plurality of cloud platforms.

In a third aspect, a network device including a processor and a memory is provided. The memory stores at least one instruction, at least one segment of program, a code set or an instruction set. The at least one instruction, the at least one segment of program, the code set or the instruction set are loaded and executed by the processor to implement a processing of an edge device in the method for website detection as described in the first aspect.

In a fourth aspect, a computer-readable storage medium storing at least one instruction, at least one segment of program, a code set or an instruction set is provided. The at least one instruction, the at least one segment of program, the code set or the instruction set are loaded and executed by a processor to implement a processing of an edge device in the method for website detection as described in the first aspect.

The technical solutions provided by the embodiments of the present disclosure have beneficial effects as follows:
In the embodiments of the present disclosure, the cloud platform receives a website detection request carrying a target URL, and forwards the website detection request to a target edge device corresponding to the target URL. The target edge device acquires a page screenshot corresponding to the target URL, and analyzes the page screenshot based on a preset character recognition algorithm and/or a picture analysis model to generates an analysis result. The target edge device feeds back the analysis result to the transmitting terminal of the website detection request. In this way, when a website needs to be detected, it may be executed by the edge device of distributed deployment based on a machine algorithm, which compared with a unified manual detection method, may effectively reduce detection cost, improve detection efficiency, and reduce central load and detection pressure. At the same time, since the edge device is close to a source station of the website, bandwidth traffic consumption may be reduced and detection delay may be shortened.

### BRIEF DESCRIPTION OF THE DRAWINGS

In order to describe the technical solutions of the embodiments of the present disclosure more clearly, the drawings used in the description of the embodiments are briefly described below. It is obvious that the drawings descripted below are only some embodiments of the present disclosure. For those skilled in the art, further drawings may be obtained in accordance with these drawings without any creative effort.
FIG. 1 is a schematic diagram of a network architecture of an edge computing system provided in an embodiment of the present disclosure;
FIG. 2 is a flowchart of a method for website detection provided in an embodiment of the present disclosure;
FIG. 3 is a schematic diagram of a network architecture of an edge computing system provided in an embodiment of the present disclosure;
FIG. 4 is a schematic structural diagram of a network device provided in an embodiment of the present disclosure.

### DETAILED DESCRIPTION

In order to make the purpose, the technical solution and the advantages of the present disclosure clearer, embodiments of the present disclosure are illustrated below in detail with reference to the accompanying drawings.

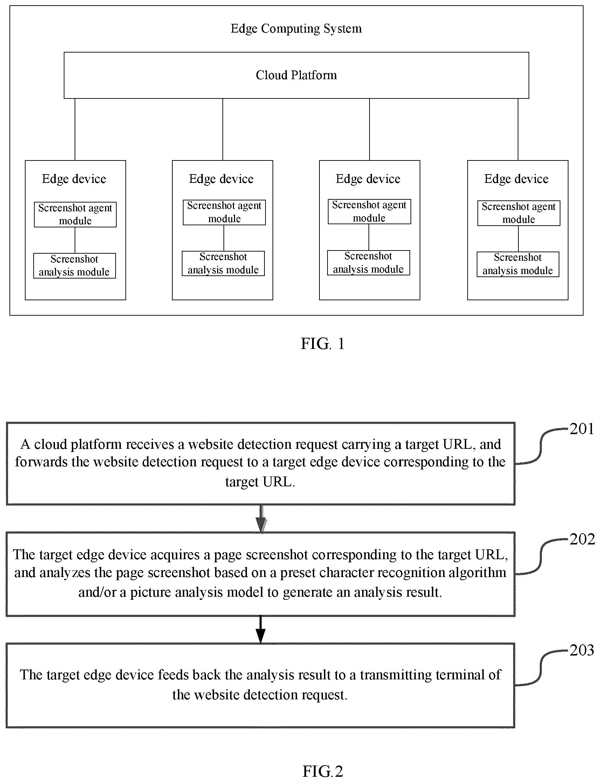

An embodiment of the present disclosure provides a method for website detection, which may be applied to an edge computing system. As shown in FIG. 1, the edge computing system may include a cloud platform and a plurality of edge devices of distributed deployment. Herein, the cloud platform may interact with users, uniformly receive a website detection request from users, and may forward the website detection request to the edge devices after performing processing such as parsing and encapsulating on the website detection request. An edge device may be any device with a screenshot function and a screenshot recognition function, and in the device, a screenshot agent module for implementing the screenshot function and a screenshot analysis module for implementing the screenshot recognition function may be specifically arranged. The edge device may be of distributed deployment in different regions and/or different operator networks, and each of the edge devices may be responsible for providing services to users in the region and/or the operator network to which it belongs. The edge device may include a processor, a memory and a transceiver. The processor may be configured to perform a processing of website detection as described in the following steps. The memory may be configured to store data required in the processing and generated data. The transceiver may be configured to receive and transmit relevant data in the processing.

The processing steps shown in FIG. 2 will be described in detail below with specific embodiments, and the content may be as follows.

In step 201, a cloud platform receives a website detection request carrying a target Uniform Resource Locator (URL), and forwards the website detection request to a target edge device corresponding to the target URL

In implementation, when a user needs to detect whether the website contains an illegal content, a website detection request may be transmitted to an edge computing system, and an URL of the website page to be detected (i.e. a target URL, may be one website page URL or multiple URLs of multiple website pages) may be added to the website detection request. Therefore, a cloud platform of the edge computing system may receive the website detection request carrying the target URL sent by the forgoing user, and then perform processing, such as parsing and encapsulating, on the website detection request. At the same time, for each target URL, after acquiring the target URL, the cloud platform may determine a target region and a target operator network to which a source station of the target URL belongs. Then, a target edge device whose distance from the source station of the target URL is less than a preset threshold and who belongs to the same operator network may be selected in accordance with the target region and the target operator network. Further, the cloud platform may forward the website detection request to the target edge device corresponding to the target URL. It is worth mentioning that different edge devices in the edge computing system may be further used to be responsible for website detection processing of different types. For example, an edge device A is configured to detect an online shopping website, an edge device B is configured to detect an online reading website, and an edge device C is configured to detect a news website, etc. In this way, when selecting the target edge device, the cloud platform may first determine all optional edge devices for detecting a target website type in accordance with the target website type corresponding to the target URL, and then select the target edge device in accordance with the forgoing target region and the target operator network in these optional edge devices.

In step 202, the target edge device acquires a page screenshot corresponding to the target URL, and analyzes the page screenshot based on a preset character recognition algorithm and/or a picture analysis model to generate an analysis result.

In implementation, after receiving the website detection request from the cloud platform, the target edge device may extract the target URL carried in the website detection request, and then obtain the page screenshot corresponding to the target URL from the source station of the target URL through a built-in screenshot agent module. At the same time, the target edge device may further analyze the page screenshot based on the preset character recognition algorithm and the picture analysis model to judge whether there are illegal texts or pictures in the page screenshot, thereby generating an analysis result.

For example, an analysis of a page screenshot may mainly include a text analysis and a picture analysis. Correspondingly, a processing of the step 202 may be as follows. A target edge device recognizes the texts in the page screenshot based on an Optical Character Recognition (OCR) technology, and compare the recognized texts with a violation text base based on an Aho-Corasick (AC) automaton algorithm to generate a text analysis result; and/or, the target edge device detects whether the page screenshot contains a violation picture based on the picture analysis model to generates a picture analysis result.

In implementation, after acquiring a page screenshot corresponding to the target URL, the target edge device may separately analyze the text and picture contents in the page screenshot to judge whether there are illegal texts or illegal pictures in the page screenshot. On the one hand, the target edge device may adopt the OCR technology to recognize the texts in the page screenshot, and then compare the recognized texts with the violation text base based on the Aho-Corasick (AC) automaton algorithm to generate a text analysis result. It is not difficult to understand that the violation text base may record the illegal texts. When a text in the violation text base appears the same text as the recognized text, it may be determined that the page screenshot contains illegal texts. For example, the target edge device may continuously update the content in the violation text base in accordance with a website detection result. For the edge device for detecting each type of website, the cloud platform may periodically summarize contents of the violation text base of all the edge devices of this type, and then update the violation text base of each edge device of this type with a summarized content. On the other hand, the target edge device may call a preset picture analysis model, and use the picture analysis model to perform a machine vision analysis on the page screenshot to detect whether there is any illegal picture content related to pornography, politics-related sensitive content, violence and terror in the page screenshot, thereby generating a picture analysis result.

In step 203, the target edge device feeds back the analysis result to a transmitting terminal of the website detection request.

In implementation, the target edge device analyzes the page screenshot corresponding to the target URL, and after generating the analysis result, may feed back the analysis result to the transmitting terminal of the website detection request. Alternatively, the user may specify a receiving terminal of the analysis result in the website detection request, so that the target edge device may transmit the analysis result to the receiving terminal after generating the analysis result. For example, in order to ensure accuracy of website detection, in step 201, the cloud platform may select a plurality of target edge devices to jointly detect the target URL. In this way, after generating analysis results, the target edge devices may further feed back the analysis results to the cloud platform first. The cloud platform may summarize the analysis results fed back by all the target edge devices, and then feed back the summarized analysis results to the transmitting terminal of website detection request.

For example, the edge device may further use the picture analysis result to carry out a model intensive training on the picture analysis model to optimize and update the picture analysis model. A corresponding processing may be as follows. The target edge device trains the picture analysis model in accordance with the picture analysis result to update a model parameter of the picture analysis model.

In implementation, each edge device may be provided with a model training module. Through the model training module, the edge device may continuously optimize a picture analysis model on it. Take the target edge device as an example. The target edge device may input the picture analysis result into the model training module after generating the picture analysis result through the picture analysis model, so that the picture analysis model may be intensively trained in accordance with the picture analysis result to update the model parameter of the picture analysis model. Alternatively, in another embodiment, a function of the model training module may be implemented by another independent model training device. The model training device may implement a training process of the above-described picture analysis model by interacting with the edge device.

For example, in order to ensure that the model training is effective, only a correct picture analysis result may be selected to train the picture analysis model. A corresponding processing may be as follows. If a result confirmation message sent by the transmitting terminal is received, the target edge device trains the picture analysis model in accordance with the picture analysis result, otherwise, the picture analysis result is discarded.

In implementation, after feeding back the analysis result to the transmitting terminal of the website detection request, the target edge device may detect whether the transmitting terminal feeds back the result confirmation message. If the result confirmation message sent by the transmitting terminal is received, the target edge device may determine that this picture analysis is correct, and may further train the picture analysis model in accordance with the picture analysis result. However, if the result confirmation message is not received or if a result error message is received, the target edge device may discard this picture analysis result. At the same time, the target edge device may further update total times of picture analysis errors after receiving the result error message, and may actively suspend a website detection service when the total times reach a preset times threshold.

For example, before using the picture analysis result to carry out an intensive training on the picture analysis model, the picture analysis result may be adjusted to ensure effectiveness of the model training. A corresponding processing may be as follows. The target edge device detects the picture analysis result based on a preset picture information detection algorithm, and adjusts the picture analysis result in accordance with the detection result. Alternatively, the target edge device receives a manual adjustment instruction for the picture analysis result, and adjusts the picture analysis result in accordance with the manual adjustment instruction.

In implementation, before using a generated picture analysis result to perform training on the picture analysis model, the target edge device may adjust the picture analysis result first to ensure correctness of the picture analysis result. In one way, a picture information detection algorithm may be preset on the target edge device to detect an illegal picture to confirm whether an illegal content does exist in the picture. In this way, the target edge device may detect the picture analysis result based on the preset picture information detection algorithm, and then adjust the picture analysis result in accordance with the detection result. In another way, those skilled in the edge computing system may manually check the picture analysis result. In order to reduce the amount of manual detection tasks, considering a low proportion of illegal pictures in the total number of pictures, those skilled may only manually check the picture analysis result with the illegal content, and then control the edge device to adjust the picture analysis result by the manual adjustment instruction. In this way, the target edge device may adjust the picture analysis result in accordance with the manual adjustment instruction after receiving the manual adjustment instruction for the picture analysis result.

For example, a cloud platform may also periodically aggregate and update a model parameter of a picture analysis model of all edge nodes. A corresponding processing may be as follows. The target edge device periodically sends model parameters of the picture analysis model to the cloud platform. The cloud platform periodically updates the model parameters of the picture analysis model corresponding to each edge device based on the model parameters of the picture analysis model newly uploaded by each edge device. The cloud platform feeds back the model parameters of the corresponding updated picture analysis model to the each edge device.

In implementation, all edge devices in the edge computing system including the target edge device may periodically send a model parameter of the picture analysis model to the cloud platform. In this way, the cloud platform may periodically update the model parameters of the picture analysis model corresponding to each edge device based on the model parameters of a newly uploaded picture analysis model of each edge device, and then feed back the model parameters of the corresponding updated picture analysis model to the each edge device, thereby ensuring accuracy of the model parameters of the picture analysis model on the each edge device. It is worth mentioning that if different edge devices in the edge computing system are used to be responsible for different types of website detection processing, the cloud platform may uniformly update the picture analysis model of the same type in accordance with the responsible type when updating the model parameters of the picture analysis model. In this way, the picture analysis model may more specifically and accurately detect a website page of a corresponding type.

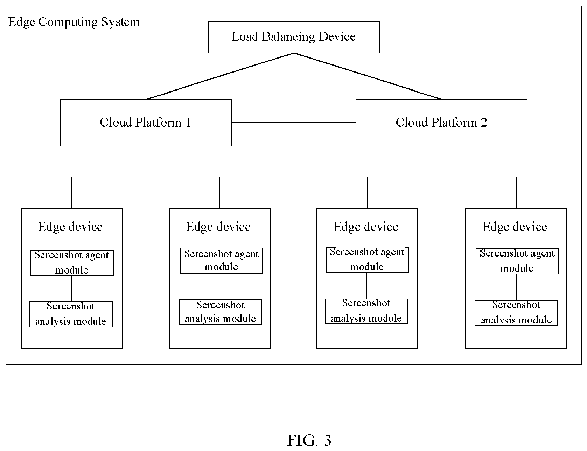

For example, as shown in FIG. 3, the edge computing system may include a load balancing device and a plurality of cloud platforms, where the load balancing device receives the website detection request carrying the target URL, and forwards the website detection request to a target cloud platform in accordance with the operating states of the plurality of cloud platforms.

In implementation, the edge computing system may be provided with a plurality of cloud platforms, and the load balancing device configured to balance a load among the plurality of cloud platforms. The load balancing device may acquire operating states of the plurality of cloud platforms in real time, and then may distribute received website detection requests among the plurality of cloud platforms in accordance with the operating states. The website detection request carrying a target URL in step 201 is taken as an example. A user may send the website detection request to the edge computing system, and the website detection request may be directed to the forgoing load balancing device. In this way, after receiving the website detection request, the load balancing device may forward the website detection request to the target cloud platform in accordance with the operating states of the plurality of cloud platforms. A processing of selecting the target cloud platform here may be performed by selecting the cloud platform with the lowest load, or selecting the cloud platform of the best performance, or in accordance with other selection principles, to which this embodiment is not limited.

In the embodiments of the present disclosure, the cloud platform receives a website detection request carrying a target URL, and forwards the website detection request to a target edge device corresponding to the target URL. The target edge device acquires a page screenshot corresponding to the target URL, and analyzes the page screenshot based on a preset text recognition algorithm and/or a picture analysis model to generate a analysis result. The target edge device feeds back the analysis result to the transmitting terminal of the website detection request. In this way, when a website needs to be detected, it may be executed by the edge device of distributed deployment based on a machine algorithm, which, compared with a unified manual detection method, may effectively reduce detection cost and improve detection efficiency, and reduce central load and detection pressure. At the same time, since the edge device is close to a source station of the website, bandwidth flow consumption may be reduced and detection delay may be shortened.

Based on the same technical concept, an embodiment of the present disclosure further provides a system for website detection. The system includes a cloud platform and a plurality of edge devices of distributed deployment, where:
the cloud platform is configured to receive a website detection request carrying a target URL and forward the website detection request to a target edge device corresponding to the target URL;
the target edge device is configured to acquire a page screenshot corresponding to the target URL, and analyze the page screenshot based on a preset character recognition algorithm and/or a picture analysis model to generate an analysis result; and
the target edge device is configured to feed back the analysis result to a transmitting terminal of the website detection request.

For example, the target edge device is specifically configured to:
recognize characters in the page screenshot based on an Optical Character Recognition (OCR) technology, and compare the recognized characters with a violation text base based on an Aho-Corasick (AC) automaton algorithm to generate a text analysis result; and/or,
detect whether the page screenshot contains a violation picture based on the picture analysis model to generate a picture analysis result.

For example, the target edge device is further configured to:
train the picture analysis model in accordance with the picture analysis result to update a model parameter of the picture analysis model.

For example, the target edge device is specifically configured to:
train the picture analysis model in accordance with the picture analysis result if a result confirmation message sent by the transmitting terminal is received, and discard the picture analysis result otherwise.

For example, the target edge device is further configured to:
detect the picture analysis result based on a preset picture information detection algorithm before training the picture analysis model in accordance with the picture analysis result,
and adjust the picture analysis result in accordance with a detection result; or
receive a manual adjustment instruction for the picture analysis result before training the picture analysis model in accordance with the picture analysis result, and adjust the picture analysis result in accordance with the manual adjustment instruction.

For example, the target edge device is further configured to periodically send the model parameter of the picture analysis model to the cloud platform;
the cloud platform, further configured to periodically update the model parameter of the picture analysis model corresponding to each edge device based on the model parameter of the picture analysis model newly uploaded by each edge device, and to feed back the model parameter of the corresponding updated picture analysis model to the each edge device.

For example, the system includes a load balancing device and a plurality of cloud platforms;
the load balancing device is configured to receive the website detection request carrying the target URL, and to forward the website detection request to a target cloud platform in accordance with operating states of the plurality of cloud platforms.

In the embodiments of the present disclosure, a cloud platform receives a website detection request carrying a target URL, and forwards the website detection request to a target edge device corresponding to the target URL. The target edge device acquires a page screenshot corresponding to the target URL, and analyzes the page screenshot based on a preset character recognition algorithm and/or a picture analysis model to generates an analysis result. The target edge device feeds back the analysis result to the transmitting terminal of the website detection request. In this way, when a website needs to be detected, it may be executed by the edge device of distributed deployment based on the machine algorithm, which compared with a unified manual detection method, may effectively reduce detection cost, improve detection efficiency, and reduce central load and detection pressure. At the same time, since the edge device is close to a source station of the website, bandwidth traffic consumption may be reduced and detection delay may be shortened.

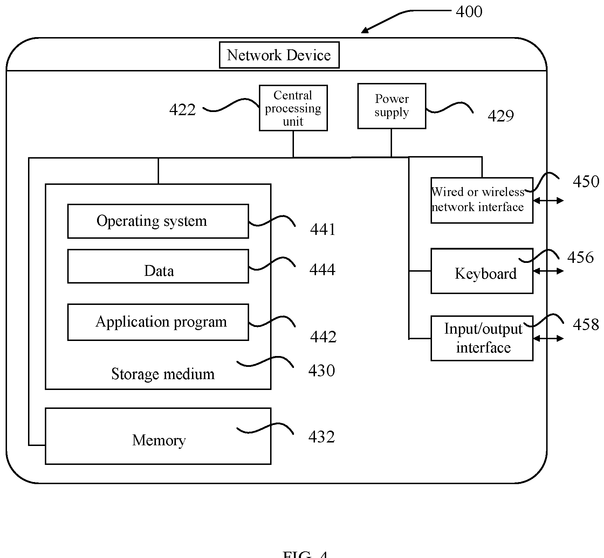

FIG. 4 is a schematic structural diagram of a network device provided in an embodiment of the present disclosure. The network device 400 may result in relatively large differences due to different configurations or performances, and may include one or more central processing units 422 (e.g., one or more processors) and a memory 432, one or more storage media 430 (e.g., one or more mass storage devices) storing an application program 442 or data 444. Herein, the memory 432 and the storage medium 430 may be a transient memory or a persistent memory. The program stored in the storage medium 430 may include one or more modules (not shown in the diagram), and each module may include operations in response to a series of instructions in the network device 400. Further, the central processing unit 422 may be configured to communicate with the storage medium 430 and execute operations in response to a series of instructions in the storage medium 430 on the network device 400.

The network device 400 may further include one or more power supplies 429, one or more wired or wireless network interfaces 450, one or more input/output interfaces 458, one or more keyboards 456, and/or one or more operating systems 441, such as Windows Server, Mac OS X, Unix, Linux, FreeBSD and so on.

The network device 400 may include a memory and one or more programs which are stored in the memory. Through configuration, one or more processors execute the one or more programs including instructions for the edge device in the above-described website detection.

Those skilled in the art may understand that all or some steps of the above-described embodiments may be completed by hardware, or by a program instructing related hardware, and the program may be stored in a computer-readable storage medium. The forgoing storage medium may be a read-only memory, a magnetic disk or an optical disk or the like.

The above description are only some embodiments of the present disclosure, and is not intended to limit the present disclosure. Any modifications, equivalent substitutions, improvements or the like made within the spirit and principles of the present disclosure shall be included in the protection scope of the present disclosure.

## Claims

1. A method for website detection, applied to an edge computing system, the edge computing system comprising a cloud platform and a plurality of edge devices deployed in a distributed manner, wherein the method comprises:
receiving, by the cloud platform, a website detection request carrying a target URL and forwarding the website detection request to a target edge device corresponding to the target URL;
acquiring, by the target edge device, a page screenshot corresponding to the target URL, and analyzing the page screenshot based on a preset character recognition algorithm and/or a picture analysis model to generate an analysis result; and
feeding back, by the target edge device, the analysis result to a transmitting terminal of the website detection request.

2. The method in accordance with claim 1, wherein the analyzing the page screenshot based on the preset character recognition algorithm and/or the picture analysis model to generate the analysis result, comprises:
recognizing, by the target edge device, characters in the page screenshot based on an Optical Character Recognition (OCR) technology, and comparing the recognized characters with a violation text base based on an Aho-Corasick (AC) automaton algorithm to generate a text analysis result; and/or,
detecting, by the target edge device, whether the page screenshot contains a violation picture based on the picture analysis model to generates a picture analysis result.

3. The method in accordance with claim 2, wherein, the method further comprises:
training, by the target edge device, the picture analysis model in accordance with the picture analysis result to update a model parameter of the picture analysis model.

4. The method in accordance with claim 3, wherein the training by the target edge device the picture analysis model in accordance with the picture analysis result comprises:
training, by the target edge device, the picture analysis model in accordance with the picture analysis result if a result confirmation message sent by the transmitting terminal is received;
otherwise, discarding the picture analysis result.

5. The method in accordance with claim 3, wherein, before the training by the target edge device the picture analysis model in accordance with the picture analysis result, the method further comprises:
detecting, by the target edge device, the picture analysis result based on a preset picture information detection algorithm, and adjusting the picture analysis result in accordance with a detection result; or
receiving, by the target edge device, a manual adjustment instruction for the picture analysis result, and adjusting the picture analysis result in accordance with the manual adjustment instruction.

6. The method in accordance with claim 3, wherein the method further comprises:
periodically sending, by the target edge device the model parameter of the picture analysis model to the cloud platform;
periodically updating, by the cloud platform, the model parameter of the picture analysis model corresponding to each edge device based on the model parameter of the picture analysis model newly uploaded by the each edge device; and
feeding back, by the cloud platform, the model parameter of the corresponding updated picture analysis model to the each edge device.

7. The method in accordance with claim 1, wherein the edge computing system comprises a load balancing device and a plurality of cloud platforms;
before the cloud platform receives the website detection request carrying the target URL, the method further comprises:
receiving, by the load balancing device, the website detection request carrying the target URL, and forwarding the website detection request to a target cloud platform in accordance with operating states of the plurality of cloud platforms.

8. A system for website detection, comprising a cloud platform and a plurality of edge devices of distributed deployment, wherein:
the cloud platform is configured to receive a website detection request carrying a target URL and forward the website detection request to a target edge device corresponding to the target URL;
the target edge device is configured to acquire a page screenshot corresponding to the target URL, and analyze the page screenshot based on a preset character recognition algorithm and/or a picture analysis model to generate an analysis result; and
the target edge device is configured to feed back the analysis result to a transmitting terminal of the website detection request.

9. The system in accordance with claim 8, wherein the target edge device is specifically configured to:
recognize characters in the page screenshot based on an Optical Character Recognition (OCR) technology, and compare the recognized characters with a violation text base based on an Aho-Corasick (AC) automaton algorithm to generate a text analysis result; and/or,
detect whether the page screenshot contains a violation picture based on the picture analysis model to generate a picture analysis result.

10. The system in accordance with claim 9, wherein the target edge device is further configured to:
train the picture analysis model in accordance with the picture analysis result to update a model parameter of the picture analysis model.

11. The system in accordance with claim 10, wherein the target edge device is specifically configured to:
train the picture analysis model in accordance with the picture analysis result if a result confirmation message sent by the transmitting terminal is received, and discard the picture analysis result otherwise.

12. The system in accordance with claim 10, wherein the target edge device is further configured to:
detect the picture analysis result based on a preset picture information detection algorithm before training the picture analysis model in accordance with the picture analysis result, and adjust the picture analysis result in accordance with a detection result; or
receive a manual adjustment instruction for the picture analysis result before training the picture analysis model in accordance with the picture analysis result, and adjust the picture analysis result in accordance with the manual adjustment instruction.

13. The system in accordance with claim 10, wherein the target edge device is further configured to periodically send the model parameter of the picture analysis model to the cloud platform;
the cloud platform is further configured to periodically update the model parameter of the picture analysis model corresponding to each edge device based on the model parameter of the picture analysis model newly uploaded by the each edge device, and to feed back the model parameter of the corresponding updated picture analysis model to the each edge device.

14. The system in accordance with claim 8, wherein the system comprises a load balancing device and a plurality of cloud platforms;
the load balancing device is configured to receive the website detection request carrying the target URL, and to forward the website detection request to a target cloud platform in accordance with operating states of the plurality of cloud platforms.

15. A network device, comprising a processor and a memory, the memory storing at least one instruction, at least one segment of program, a code set or an instruction set, wherein the at least one instruction, the at least one segment of program, the code set or the instruction set are loaded and executed by the processor to implement a processing of an edge device in the method for website detection in accordance with any one of claims 1 to 7.

16. A computer-readable storage medium, storing at least one instruction, at least one segment of program, a code set or an instruction set, wherein the at least one instruction, the at least one segment of program, the code set or the instruction set are loaded and executed by a processor to implement a processing of an edge device in the method for website detection in accordance with any one of claims 1 to 7.
